# FASCICULE DE BREVET EUROPEEN

(11) **EP 2 175 306 B1**
(45) Date de publication et mention de la délivrance du brevet: **14.03.2012**
(21) Numéro de dépôt: 09171373.5
(22) Date de dépôt: 25.09.2009
(51) Int. Cl.: G02C 7/02, G02C 7/06

(54) **Verre ophtalmique multifocal**
Multifokales Brillenglas
Multifocal ophthalmic lens

(30) Priorité: 07.10.2008 FR 0856802
(43) Date de publication de la demande: 14.04.2010
(73) Titulaire: ESSILOR INTERNATIONAL (Compagnie Générale d'Optique), 94220 Charenton le Pont (FR)
(72) Inventeur: Drobe, Björn, 94220 CHARENTON LE PONT (FR)
(74) Mandataire: Boire, Philippe Maxime Charles

(56) Documents cités:
- EP-A- 0 445 994
- EP-A- 1 703 313
- EP-A- 1 959 294
- WO-A-03/054616
- WO-A1-2009/126946
- US-A- 1 955 047
- US-A1- 2007 109 494
- STEFANIE SCHULDT: "ysis - Natürliches sehen erleben" DEUTSCHE OPTIKER ZEITUNG, XX, DE, no. 5/2004, 1 mai 2004 (2004-05-01), pages 38-43, XP002398937
- CHENG A C K ET AL: "Assessment of pupil size under different light intensities using the Procyon pupillometer" JOURNAL CATARACT AND REFRACTIVE SURGERY, SURGERY, FAIRFAX, VA, vol. 32, no. 6, 1 juin 2006 (2006-06-01), pages 1015-1017, XP024965774 ISSN: 0886-3350 [extrait le 2006-06-01]

## Description

La présente invention concerne un procédé de réalisation d'un verre multifocal de lunettes ophtalmiques.

De façon connue, un verre de lunettes ophtalmiques qui est destiné à un porteur presbyte doit produire des corrections ophtalmiques appropriées pour plusieurs distances de vision. Pour cela des verres multifocaux ou progressifs sont fournis depuis longtemps, qui ont des puissances optiques différentes entre des parties distinctes de ces verres. Un tel verre procure au porteur une correction ophtalmique qui est adaptée à la distance d'un objet regardé, si la direction du regard du porteur traverse le verre dans une partie de celui-ci qui a été prévue pour cette distance de vision. Un porteur qui est nouvellement équipé d'un tel verre doit alors s'habituer à orienter sa tête et ses yeux en fonction de la distance d'éloignement de l'objet regardé, pour utiliser la partie appropriée du verre.

Néanmoins, une telle orientation de la tête et des yeux peut ne pas être spontanée, ou même être impossible dans certaines circonstances. En effet, les verres multifocaux ou progressifs qui sont actuellement disponibles sont adaptés pour permettre au porteur de lire en regardant vers le bas. Ils sont donc adaptés pour lire un livre qui est posé sur une table ou tenu sur les genoux en position assise. Ainsi, la correction ophtalmique qui est produite dans la partie inférieure de ces verres est adaptée pour la vision de près, c'est-à-dire pour une distance de vision d'environ 0,4 m (mètre). Elle est donc inadaptée pour regarder des obstacles qui sont situés au sol devant le porteur, à une distance des yeux du porteur qui est supérieure à 0,5 m. Or, une telle situation est celle de l'approche d'un escalier, par exemple. L'image des premières marches de l'escalier qui est formée sur la rétine du porteur n'est alors pas nette, et le porteur peut être victime d'un accident causé par cette mauvaise perception visuelle. Un autre exemple de situation pour laquelle les verres multifocaux ou progressifs actuels ne sont pas adaptés est la lecture d'une page d'écriture qui est accrochée sur un mur, à hauteur d'yeux. En effet, le porteur est alors amené à lire le document à travers la zone de vision de loin de ses verres de lunettes.

Le document EP 0 367 878 décrit un verre à zones concentriques qui présente plusieurs valeurs de distance focale en tout point de sa surface. Un tel verre peut fournir simultanément deux valeurs de correction ophtalmique, par exemple pour la vision de loin et pour la vision de près, quelque soit la direction du regard à travers le verre. Mais, parce qu'une partie de la puissance optique est apportée par effet de diffraction lumineuse, un tel verre présente un chromatisme important. La puissance optique effective du verre ne peut alors pas être accordée précisément pour toutes les couleurs par rapport au défaut de sphère qui est déterminé pour un sujet amétrope. En outre, quelque soit la distance de l'objet qui est regardé par le porteur d'un tel verre, et quelque soit la direction de son regard à travers le verre, une partie de la lumière qui rentre par la pupille converge selon une distance focale qui n'est pas appropriée. Cette partie de lumière ne participe alors pas à l'image nette qui est produite sur la rétine du porteur conformément à celle des distances focales qui est appropriée. Il en résulte une perte de contraste qui affecte la vision du porteur en toutes circonstances.

Un but de la présente invention consiste donc à fournir un verre ophtalmique à porteur presbyte, selon un nouveau procédé pour éviter les inconvénients des verres antérieurs.

Pour cela, l'invention propose un procédé de réalisation d'un verre multifocal de lunettes ophtalmiques destiné à un porteur identifié, qui comprend les étapes suivantes :
/1/ obtenir une première correction ophtalmique du porteur pour une première distance de vision, et au moins deux secondes corrections ophtalmiques du porteur respectivement pour au moins deux secondes distances de vision, ces deux secondes corrections étant différentes entre elles ;
/2/ déterminer une zone de vision principale et une zone de vision secondaire du verre ;
/3/ diviser la zone de vision secondaire en au mois deux séries de régions, les régions étant contiguës et alternées par rapport aux séries avec un pas qui est inférieur ou égal à 1 mm ;
/4/ déterminer des premiers paramètres du verre dans la zone de vision principale, qui correspondent à la première correction ophtalmique, et, pour chaque série de régions, déterminer des seconds paramètres du verre dans les régions de cette série en fonction d'une des secondes corrections ophtalmiques qui a été obtenue à l'étape /1/ et qui est affectée à cette même série de régions ; et
/5/ réaliser le verre conformément aux premiers et seconds paramètres.

Ainsi, un verre de lunettes réalisé selon l'invention produit, dans sa zone de vision principale, une correction ophtalmique qui est adaptée au porteur pour la première distance de vision. Toute ou presque toute la lumière qui passe par la pupille du porteur et qui forme une image sur sa rétine traverse alors la zone de vision principale du verre, de sorte que l'image de l'objet regardé présente un contraste maximal. La vision du porteur est donc corrigée de façon optimale pour la première distance de vision lorsque la direction de son regard passe à travers la zone de vision principale, notamment à proximité d'un centre de celle-ci. Pour ces conditions de vision, la qualité de correction ophtalmique que procure le verre multifocal de l'invention est donc analogue à celle d'un verre unifocal.

Le verre réalisé selon l'invention possède en plus une zone de vision secondaire, dont des parties distinctes sont dédiées à la correction ophtalmique du porteur pour plusieurs secondes distances de vision. Une telle allocation de régions à l'intérieur de la zone de vision secondaire, séparément et respectivement aux corrections ophtalmiques établies pour plusieurs distances de vision qui sont différentes, ne résulte pas d'un effet diffractif. De cette façon, le verre ne présente pas de chromatisme important. Par exemple, les paramètres du verre qui sont déterminés puis appliqués dans les régions de deux séries différentes peuvent comprendre une courbure moyenne d'une surface du verre et/ou un indice de réfraction lumineuse d'un matériau du verre.

En outre, étant donné que les régions sont alternées par rapport aux séries avec un pas qui est inférieur à 1 mm (millimètre), les corrections, qui sont respectivement adaptées aux différentes distances de vision, sont disponibles simultanément dans la zone de vision secondaire. En effet, le pas d'alternance des régions par rapport aux corrections ophtalmiques qui sont produites est alors inférieur au diamètre de la pupille du porteur. Ainsi, lorsque la direction du regard du porteur traverse la zone de vision secondaire du verre, l'une des secondes corrections intervient lorsque l'objet qui est regardé par le porteur est situé sensiblement à la seconde distance de vision correspondante. Elle modifie alors la convergence des rayons lumineux qui traversent le verre dans l'une des régions de la série qui produit cette seconde correction. Mais une autre des secondes corrections intervient aussi lorsque la direction du regard du porteur traverse le verre au même endroit dans la zone de vision secondaire, lorsque l'objet qui est regardé est situé sensiblement à une autre des secondes distances de vision. Cette dernière correction modifie d'autres rayons lumineux qui traversent le verre dans une seconde région de la série affectée à cette autre correction. Le porteur peut donc percevoir des images nettes d'objets qui sont situés à des distances différentes, même lorsqu'il regarde à chaque fois à travers le même endroit de la zone de vision secondaire du verre.

Par exemple, une même partie inférieure du verre, lorsqu'elle est située dans la zone de vision secondaire prévue selon l'invention, peut procurer au porteur une vision de près qui est nette, notamment pour une activité de lecture, et une vision d'obstacles situés au sol devant le porteur qui est aussi nette. Ainsi, le porteur a une perception visuelle qui est nette dans chaque circonstance.

De façon générale, les variations suivantes peuvent être envisagées, pour des procédés conformes à l'invention :
- la zone de vision principale et la zone de vision secondaire peuvent avoir des positions relatives quelconques dans le verre. Notamment, l'une peut entourer l'autre, ou bien ne s'étendre que sur un ou plusieurs côtés de cette dernière ;
- la zone de vision principale et la zone de vision secondaire peuvent chacune être centrées par rapport au verre, ou globalement décalées par rapport à un centre du verre dans une direction quelconque ;
- le nombre de séries de régions, qui sont distinguées par les secondes corrections ophtalmiques qu'elles produisent respectivement dans la zone de vision secondaire du verre, peut varier. De préférence, la zone de vision secondaire est divisée en deux ou trois séries de régions ;
- l'une des corrections ophtalmiques peut être nulle. Autrement dit, la puissance optique qui est produite par le verre dans la zone ou la série de régions correspondante est nulle ;
- la première distance de vision et l'une des secondes distances de vision peuvent être identiques. Dans ce cas, les corrections ophtalmiques correspondantes qui sont produites dans la zone de vision principale et dans les régions de l'une des séries à l'intérieur de la zone de vision secondaire, sont égales ; et
- le pas d'alternance des premières et secondes régions dans la zone de vision secondaire peut être constant ou variable.

De préférence, la zone de vision principale et les régions de chaque série sont déterminées par des variations d'au moins un paramètre d'une même première surface du verre ophtalmique. Une seconde surface du verre peut alors être modifiée en reprise pour adapter le verre à la correction ophtalmique du porteur, au moins pour la première distance de vision. De cette façon, des verres semi-finis identiques qui déterminent la zone de vision principale et les différentes séries de régions à l'intérieur de la zone de vision secondaires peuvent être utilisés pour des porteurs ayant des corrections ophtalmiques qui sont différentes pour la première distance de vision. Les variations paramétriques entre les régions qui appartiennent à des séries différentes peuvent former des discontinuités de la première surface elle-même. Un gain en épaisseur et un allègement du verre peuvent en résulter. Cette première surface peut être la face antérieure convexe du verre, ou sa face postérieure concave. Ce peut être aussi une surface intermédiaire entre les faces antérieure et postérieure du verre, qui sépare deux milieux transparents ayant des valeurs différentes d'un indice de réfraction lumineuse.

De préférence encore, la zone de vision principale peut contenir un disque de rayon 1 mm. Elle est alors traversée par une proportion significative des rayons lumineux qui forment une image sur la rétine du porteur, lorsque la direction du regard de celui-ci passe par ou à proximité d'un centre de la zone de vision principale. Le contraste de l'image sur la rétine du porteur est alors plus particulièrement élevé.

Selon un premier perfectionnement de l'invention, une taille et/ou une position de la zone de vision principale dans le verre peut être adaptée en fonction du porteur, notamment en fonction d'habitudes posturales de celui-ci. De cette façon, le verre peut procurer un confort supérieur, ou réduire une éventuelle durée initiale d'accoutumance du porteur. En particulier, la taille et/ou la position de la zone de vision principale peuvent être déterminées à l'étape /2/ en fonction d'une activité principale du porteur, qui met en oeuvre la première distance de vision. Ainsi, il n'est pas nécessaire pour le porteur de modifier l'orientation de sa tête lorsqu'il pratique cette activité avec un nouveau verre selon l'invention.

Alternativement, la taille de la zone de vision principale peut être déterminée en fonction d'une propension du porteur à tourner plutôt la tête ou les yeux en changeant sa direction de regard. Dans ce cas, l'étape /2/ peut comprendre les sous-étapes suivantes :
/2-1/ caractériser une amplitude d'un mouvement de tête du porteur, qu'il effectue en regardant successivement des objets qui sont situés dans des directions différentes ; et
/2-2/ déterminer la taille de la zone de vision principale du verre de sorte que cette taille de zone de vision principale décroisse en fonction de l'amplitude du mouvement de tête qui a été caractérisée pour le porteur.

De cette façon, la zone de vision secondaire du verre, qui procure une vision nette pour plusieurs distances de vision différentes, peut être plus près d'un point central de la zone de vision principale qui est très utilisé par un porteur qui tourne principalement la tête en changeant de direction de regard. A l'inverse, la zone de vision principale peut être plus grande pour un porteur qui tourne plutôt les yeux que la tête. Ainsi, quelque soit la propension du porteur à tourner plutôt la tête ou les yeux, sa vision peut être corrigée d'une façon qui est appropriée pour plusieurs distances de vision, et ce à des valeurs de l'excentricité qui sont faibles autant que possible pour ne pas gêner sa façon habituelle de changer la direction de son regard.

Selon un second perfectionnement de l'invention, une proportion des régions d'au moins une série à l'intérieur de la zone de vision secondaire du verre peut être déterminée en fonction d'une activité du porteur mettant en oeuvre la seconde distance de vision qui est affectée à cette série. Comme pour la taille de la zone de vision principale, cette proportion des régions de la série sélectionnée peut alternativement être déterminée en fonction de l'amplitude du mouvement de tête qui est effectué par le porteur, lorsqu'il regarde successivement dans des directions différentes. Elle est déterminée de sorte qu'un quotient d'une somme de surfaces de régions de cette série par une surface d'une partie correspondante de la zone de vision secondaire, croisse en fonction de l'amplitude du mouvement de tête effectué par le porteur.

Pour mettre en oeuvre ces perfectionnements, l'amplitude du mouvement de tête qui est effectué par le porteur peut être caractérisée en exécutant les sous-étapes suivantes :
- mesurer un angle de rotation de la tête du porteur, lorsqu'il regarde successivement deux objets qui sont situés dans des directions séparées angulairement ; et
- déterminer une valeur d'un gain à partir d'un quotient entre l'angle qui a été mesuré pour la rotation de la tête du porteur d'une part, et la distance angulaire entre les deux directions de regard d'autre part, ce gain variant comme une fonction croissante ou comme une fonction décroissante du quotient.

De façon générale, un verre ophtalmique multifocal qui est réalisé selon l'invention peut être adapté pour produire une correction de myopie ou une correction d'hypermétropie de la vision de loin du porteur.

Dans un mode particulier de mise en oeuvre de l'invention, la zone de vision secondaire peut être divisée en deux séries de régions, avec la première distance de vision et une quelconque des secondes distances de vision qui peuvent être égales. L'une des secondes distances de vision peut être supérieures à 2 m, correspondant à la vision de loin du porteur. Simultanément, l'autre seconde distance de vision peut être comprise entre 0,3 m et 0,5 m, correspondant à une vision de près, ou être comprise entre 0,5 m et 2 m, correspondant à une distance de vision intermédiaire. Le verre de lunettes qui est réalisé à partir de la lentille produit alors une première puissance optique qui est identique dans la zone de vision principale et dans les régions de l'une des séries. Il produit simultanément une seconde puissance optique dans les régions de l'autre série, qui est différente de la première puissance optique. Un tel verre procure donc une vision qui est nette à travers tout le verre pour une première distance de vision, et pour une seconde distance de vision à travers la zone de vision secondaire.

Dans un autre mode particulier de mise en oeuvre de l'invention, la zone de vision secondaire peut être divisée en trois séries de régions, avec la première distance de vision et une quelconque des secondes distances de vision qui peuvent être égales. L'une des secondes distances de vision peut être comprise entre 0,3 m et 0,5 m. Elle correspond alors à la vision de près du porteur. Simultanément, une autre des secondes distances de vision peut être comprise entre 0,5 m et 2 m, correspondant à une distance de vision intermédiaire, et une dernière des secondes distances de vision peut être supérieure à 2 m, correspondant à la vision de loin. Le verre de lunettes produit alors une première puissance optique identique dans la zone de vision principale et dans les régions de l'une des séries. Il produit simultanément deux secondes puissances optiques différentes, respectivement dans les deux autres séries de régions. Un tel autre verre procure donc une vision qui est nette à travers tout le verre pour une première distance de vision, et pour deux autres distances de vision dans la zone de vision secondaire.

D'autres particularités et avantages de la présente invention apparaîtront dans la description ci-après d'exemples de mise en oeuvre non limitatifs, en référence aux dessins annexés, dans lesquels :
- les figures 1a et 1b sont deux vues d'une première lentille qui peut être réalisée selon l'invention, respectivement en coupe et en plan ;
- les figures 2a et 2b correspondent respectivement aux figures 1a et 1b, pour une seconde lentille qui peut être réalisée selon l'invention ;
- les figures 3a et 3b illustrent un principe de mesure de mouvements d'yeux et de tête pour un porteur de lunettes ;
- la figure 4 est un diagramme représentant des variations d'une taille de zone de vision principale pour un verre réalisé selon l'invention ;
- la figure 5 est un diagramme représentant des variations d'une proportion de régions dédiées à une correction ophtalmique établie pour une distance de vision déterminée, à l'intérieur de la zone de vision secondaire pour une série de verres réalisés selon l'invention ;
- la figure 6 est un diagramme représentant des variations de puissance optique dans des secondes régions de la zone de vision secondaire, pour un exemple particulier de verre réalisé selon l'invention ;
- la figure 7 correspond à la figure 5 pour un autre exemple particulier de verre réalisé selon l'invention ; et
- les figures 8a à 8d illustrent des partitions de quatre verres réalisés selon l'invention.

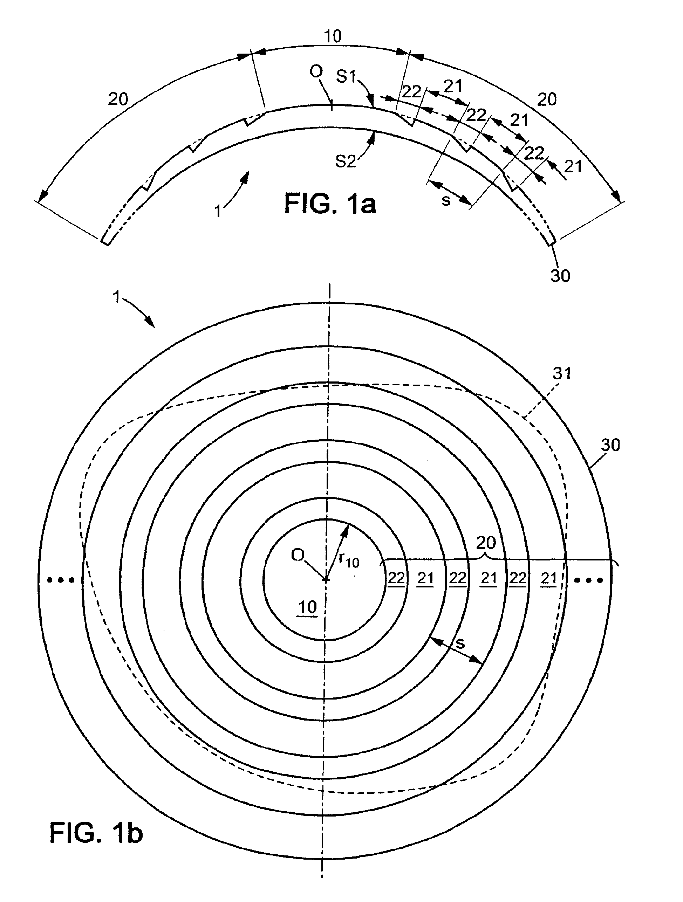

Pour raison de clarté, les dimensions qui apparaissent sur les figures 1a, 1b, 2a, 2b, 8a à 8b ne correspondent pas à des dimensions réelles ni à des rapports de dimensions réels. En outre, des références identiques qui sont indiquées sur des figures différentes ont des significations identiques.

Conformément aux figures 1a et 1b, une lentille ophtalmique 1 comprend une face antérieure S1 et une face postérieure S2. Les faces antérieure S1 et postérieure S2 sont désignées ainsi par rapport à la position d'utilisation de la lentille 1 par un porteur de celle-ci. La lentille 1 peut former un verre semi-fini ou fini. Par verre semi-fini, on entend une ébauche de verre de lunettes, dont une seule des faces antérieure ou postérieure possède une forme définitive. L'autre face est alors usinée ultérieurement, notamment pour conférer au verre fini des valeurs de puissance optique qui correspondent à l'amétropie qui a été déterminée pour le futur porteur du verre. Lorsque la lentille 1 est un verre semi-fini, elle possède un bord périphérique initial 30 qui peut être circulaire avec un diamètre de 60 mm, par exemple. Lorsqu'il s'agit d'un verre fini, avec ses deux faces S1 et S2 qui sont définitives, son bord périphérique peut être encore celui du verre semi-fini. Ce bord peut aussi avoir été détouré aux dimensions d'un logement de monture de lunettes ophtalmiques, dans lequel le verre est destiné à être assemblé. Le contour 31 sur la figure 1b représente le bord d'un tel verre de lunettes fini après détourage.

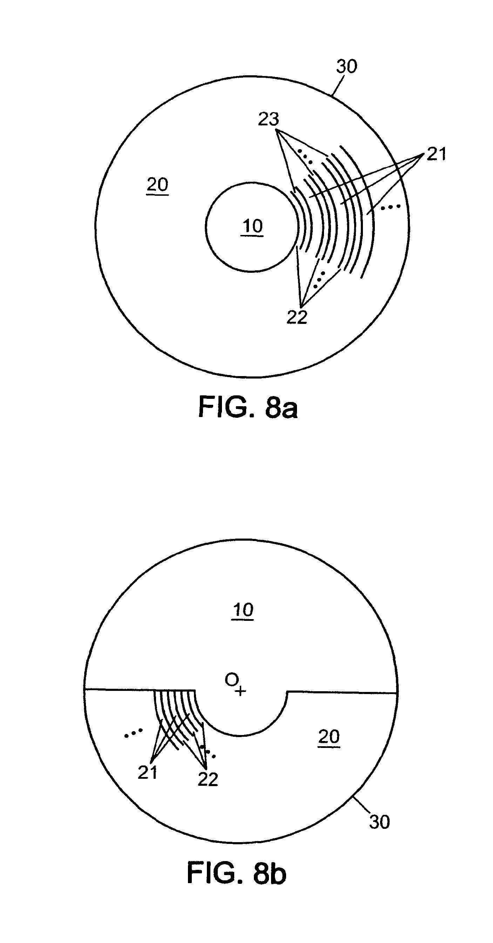

La lentille 1 est divisée en plusieurs zones parallèlement à l'une des faces S1 ou S2, dont une zone de vision principale 10 et une zone de vision secondaire 20. Par exemple, la zone de vision secondaire 20 peut entourer la zone de vision principale 10 à l'intérieur du bord périphérique 30 ou 31, mais il ne s'agit là que d'une configuration particulière prise à titre d'illustration, et les figures 8b à 8d décrites ultérieurement montrent d'autres configurations possibles. En particulier, la zone de vision secondaire 20 peut être limitée à un secteur angulaire réduit autour de ou sur un côté de la zone de vision principale 10. O désigne un point central de la zone de vision principale 10. On supposera dans un premier temps que la zone de vision principale 10 est sensiblement centrée dans le verre, par rapport au bord périphérique 30 ou 31. Dans ce cas, le point O peut être confondu avec la croix de montage du verre, qui est prise comme repère pour placer le verre par rapport à un logement de monture de lunettes dans lequel il est destiné à être assemblé.

De préférence, la zone de vision principale 10 peut contenir un disque de rayon 1 mm.

De préférence aussi, la zone de vision principale 10 peut être contenue dans un disque de rayon 7,5 mm. Ainsi, la zone de vision secondaire 20 procure au porteur des secondes corrections ophtalmiques qui sont adaptées à plusieurs distances de vision, pour des valeurs d'excentricité à partir de et supérieures à environ 15° (degré). En outre, la zone de vision secondaire 20 présente une surface qui est suffisante pour mettre en oeuvre l'invention, même lorsque le logement du verre dans la monture est petit.

La zone de vision principale 10 est dédiée à une première correction d'amétropie du porteur, établie pour une première distance de vision. Ainsi, le verre fini qui est réalisé à partir de la lentille 1 possède une première puissance optique dans la zone 10. Cette première puissance optique est en général constante dans toute la zone 10.

La zone de vision secondaire 20 peut être divisée en deux séries de régions contiguës, qui sont référencées 21 ou 22 selon qu'elles appartiennent à une première ou à la seconde des deux séries, respectivement. Les régions 21 et 22 sont alternées et dédiées respectivement en fonction de la série à l'obtention de deux corrections ophtalmiques pour le porteur du verre fini. Ainsi, les régions 21 sont dédiées à l'obtention d'une seconde correction d'amétropie, et les régions 22 sont dédiées à l'obtention d'encore une autre correction d'amétropie, qui est différente de la seconde correction.

Selon l'invention, la correction ophtalmique qui est produite dans les régions 21 de la première série d'une part, et celle qui est produite dans les régions 22 de la seconde série d'autre part, sont établies pour le porteur pour deux distances de vision différentes l'une de l'autre. De cette façon, un verre selon l'invention est du type multifocal, et est particulièrement adapté pour un porteur presbyte. Dans certaines réalisations particulières de l'invention, la seconde correction d'amétropie qui est produite par le verre dans les régions 21 peut être identique à la première correction qui est produite dans la zone de vision principale 10.

Chaque correction ophtalmique, et notamment la première correction ophtalmique qui est produite dans la zone de vision principale 10, peut être déterminée pour le porteur d'une des façons qui connues de l'Homme du métier. Eventuellement, la correction qui est associée à l'une des séries de régions de la zone de vision secondaire 20 peut être déduite d'une combinaison entre la première correction ophtalmique de la zone de vision principale 10 avec une autre des secondes corrections qui est produite dans les régions d'une série différente. Dans tous les cas, toutes les corrections ophtalmiques considérées dans la présente invention concernent la vision fovéale du porteur.

Un verre selon l'invention est réalisé dans la zone de vision principale 10 conformément à un premier ensemble de paramètres qui correspond à la première correction d'amétropie. De même, il est réalisé dans les régions de chaque série à l'intérieur de la zone de vision secondaire 20 conformément à un second ensemble de paramètres qui correspond à l'une des secondes corrections d'amétropie. Ces seconds ensembles de paramètres varient d'une série à une autre, en fonction des corrections ophtalmiques correspondantes. Tous ces paramètres peuvent être des courbures d'une face de la lentille 1, par exemple la face S1, dans les régions ou zones correspondantes. Dans ce cas, la face S1 présente des discontinuités de courbure entre deux régions 21 et 22 qui sont contiguës, ainsi qu'entre la zone de vision principale 10 et celles des régions 21 ou 22 qui lui est contiguë. Eventuellement, ces discontinuités de courbure peuvent être superposées à des discontinuités de hauteur sagittale, perpendiculairement à la face S1 (figure 1 a).

La puissance optique du verre fini dans la zone de vision principale 10 est notée P₁. Celle qui est produite dans les régions de l'une des séries, par exemple les régions 22, est notée P₂. Selon les paramètres du verre dans les régions 22, la puissance optique P₂ peut être constante ou varier en fonction d'une distance radiale mesurée sur le verre à partir d'un point de référence, par exemple le point O. Une telle constance ou variation intervient d'une région 22 à une autre, et éventuellement à l'intérieur de chaque région 22. Par exemple, la puissance optique P₂ peut d'abord croître à partir de la limite entre les zones 10 et 20, en valeur algébrique et en fonction de l'excentricité, jusqu'à atteindre une valeur maximale puis décroître en direction du bord périphérique 30 ou 31.

Dans la présente description, on désigne par excentricité un angle entre la direction du regard du porteur à travers le verre et une direction de référence qui passe par un point fixe du verre. Ce point fixe peut être la croix de montage qui est imprimée sur le verre, et qui correspond en général à la direction de regard droit devant pour le porteur. Par suite, l'excentricité de la direction du regard du porteur à travers le verre peut être repérée par la distance radiale sur le verre entre la croix de montage et le point de traversée de la face antérieure S1 du verre par cette direction de regard. Elle est notée E dans la suite. Pour raison de simplicité d'une partie de la description, on supposera dans un premier temps que le centre O de la zone de vision principale 10 coïncide avec la croix de montage du verre.

Selon une première possibilité, la valeur de la puissance optique P₂ à l'intérieur des régions 22 peut être la même dans toute la zone de vision secondaire 20.

Selon une seconde possibilité, l'écart absolu |P₂ - P₁| entre la valeur de la puissance optique P₂ dans les régions 22 d'une part, et la valeur de la puissance optique P₁ dans la zone de vision principale 10 d'autre part, peut varier progressivement en fonction de l'excentricité E. Une telle variation intervient donc d'une région 22 à une autre de la même série en se déplaçant en direction du bord périphérique 30 ou 31, de même qu'à l'intérieur de chaque région 22.

Selon une troisième possibilité encore, la puissance optique P₂ peut être constante à l'intérieur de chaque région 22, alors que l'écart absolu |P₂ - P₁| varie entre deux régions 22 successives en direction du bord périphérique 30 ou 31.

Il est entendu que l'un quelconque des types de variations de puissance optique qui viennent être énumérés pour les régions 22 peut être mis en oeuvre simultanément, d'une façon similaire et indépendante pour chaque série de régions à l'intérieur de la zone de vision secondaire 20. En particulier, la puissance optique peut varier dans les régions 21 d'une façon qui est différente de celle dans les régions 22.

De façon générale, les régions de l'une des séries à l'intérieur de la zone de vision secondaire 20 peuvent avoir chacune au moins une dimension qui est comprise entre 15 µm (micromètre) et 1000 µm, de préférence entre 25 µm et 50 µm. Ainsi, la partition de la zone de vision secondaire 20 entre les régions 21 et 22 ne provoque aucune diffraction significative, tout en restant invisible ou presqu'invisible à l'oeil nu. Aucune gêne n'en résulte donc pour le porteur, et le verre conserve une qualité esthétique qui est compatible avec les exigences du domaine ophtalmique.

Le pas d'alternance des régions dans la zone de vision secondaire est la distance de décalage entre deux régions successives qui appartiennent à une même série. Ainsi, le pas d'alternance des régions 21 et 22 (figures 1a et 1b) est la distance de décalage entre deux régions 21 qui sont séparées par une région 22 unique. Il est noté s sur les figures. Le pas d'alternance possède des valeurs locales dans la zone de vision secondaire. Il peut être constant ou varier à l'intérieur de cette zone, tout en restant inférieur à 1 mm. Par ailleurs, selon une disposition préférée des régions dans la zone de vision secondaire 20, les régions 21, 22 de chaque série peuvent être des bandes qui sont disposées dans un secteur angulaire autour d'une partie au moins de la zone de vision principale 10. Ces bandes de régions peuvent alors être alternées le long de directions radiales qui partent du centre de la partie de zone de vision principale 10 vers le bord périphérique 30 ou 31 de la lentille. Dans ce cas, la largeur de chaque bande de région 22 peut être comprise entre 15 µm et 1000 µm, de préférence entre 25 µm et 50 µm, le long des directions radiales issues du centre O.

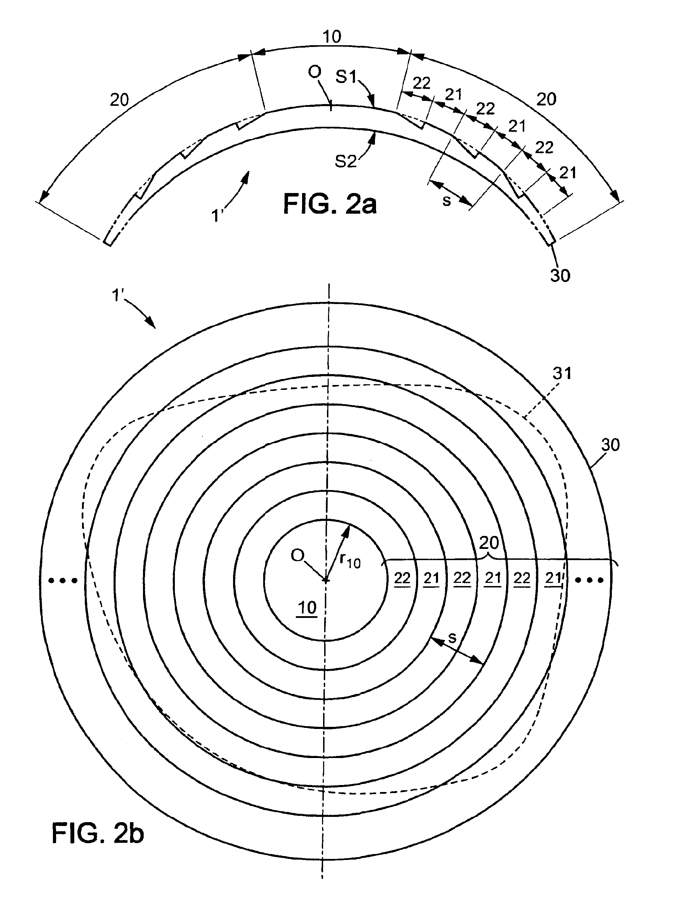

La lentille des figures 2a et 2b est référencée globalement 1'. Les lentilles 1 et 1' présentent des zones de vision principale respectives 10 qui ont des dimensions identiques. Elles sont circulaires et centrées sur le même point O confondu avec la croix de montage, et possèdent le même rayon r₁₀. Simultanément, le pas d'alternance s des régions 21 et 22 est identique pour les lentilles 1 et 1'. Les lentilles 1 et 1' sont différenciées par les valeurs d'un rapport cyclique des régions 21 et 22. Dans la présente description, on entend par rapport cyclique des régions 22 le quotient de la dimension des régions 22 selon la direction d'alternance avec les régions de la ou des autre(s) série(s), par la valeur locale du pas d'alternance s. Ce rapport cyclique peut être constant ou varier dans la zone de vision secondaire 20.

Selon deux perfectionnements de l'invention, la taille de la zone de vision principale 10 d'une part, et la proportion des régions d'une série sélectionnée, par exemple les régions 22, dans la zone de vision secondaire 20 d'autre part, peuvent être adaptées au porteur du verre en fonction de sa propension à tourner plus les yeux ou la tête lorsqu'il regarde successivement des objets qui sont dans deux directions différentes. Il est entendu que la taille de la zone 10 et la proportion des régions 22 peuvent être ainsi adaptées indépendamment l'une de l'autre. En particulier, la taille de la zone 10 seulement peut être adaptée de cette façon au porteur, ou bien la proportion des régions 22 dans la zone 20 seulement.

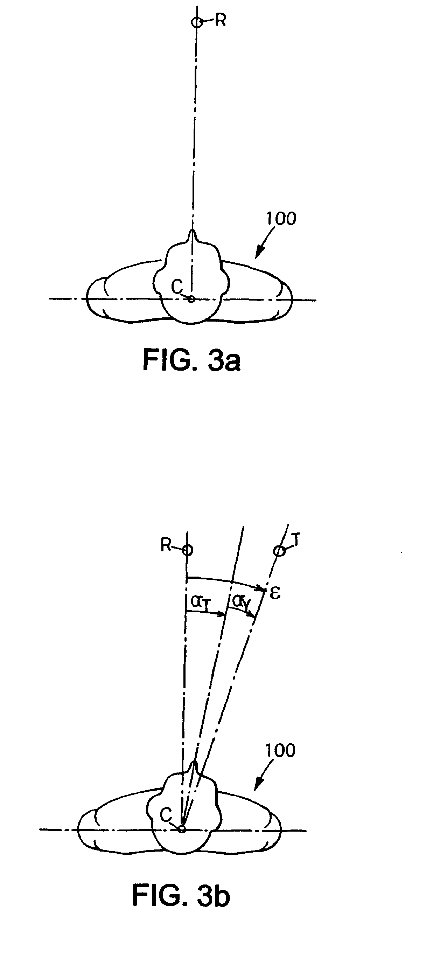

Dans ce but, on caractérise d'abord des amplitudes relatives de mouvements d'yeux et de tête qui sont effectués par le porteur auquel le verre est destiné. Pour cela, on peut demander au porteur de regarder droit devant lui une première cible, dite cible de référence, en se plaçant face à celle-ci. La cible de référence est notée R sur la figure 3a, et la référence 100 désigne le porteur. Elle peut être située à hauteur d'yeux pour le porteur, en particulier. Le porteur se place donc devant la cible de référence R, avec les épaules sensiblement situées dans un plan vertical qui est perpendiculaire à la ligne virtuelle qui relie sa tête à la cible de référence. Il a alors la tête et les yeux qui sont orientés en direction de la cible de référence.

A partir de cette situation, on demande au porteur 100 de regarder une seconde cible, dite cible de test et notée T, qui est décalée par rapport à la cible de référence R, sans bouger les épaules. Pour ce faire, il tourne pour partie la tête et pour partie les yeux (figure 3b), de sorte que la direction de son regard passe de la cible de référence R à la cible de test T. De préférence, la cible de test T est décalée horizontalement par rapport à la cible de référence R, de façon à caractériser les mouvements horizontaux de tête et d'yeux du porteur.

La distance angulaire entre la cible de test T et celle de référence R, par rapport au porteur 100, est notée ε. On prend le centre C de rotation de la tête comme pôle de mesure des angles dans un plan horizontal qui contient ce pôle et les deux cibles R et T. Sur la figure 3b, α_{T} désigne l'angle de rotation de la tête du porteur 100, aussi appelé déviation angulaire de la tête, pour passer de la première situation d'observation de la cible de référence R à la seconde situation d'observation de la cible de test T. α_{Y} est l'angle de la rotation des yeux qui est effectuée simultanément par le porteur 100. La distance angulaire ε est donc égale à la somme des deux angles α_{T} et α_{Y}. L'excentricité E du regard du porteur à travers le verre telle qu'elle a été introduite plus haut dans cette description correspond à l'angle de déviation angulaire α_{Y}.

On calcule alors le quotient de la déviation angulaire de la tête α_{T} par la distance angulaire ε. Ce quotient est égal à l'unité pour un porteur qui a exclusivement tourné la tête pour passer de la cible de référence R à la cible de test T, et à zéro pour un porteur qui a tourné seulement les yeux.

On calcule ensuite un gain G pour ce test de coordination de mouvement "oeil/tête" qui a été effectué pour le porteur 100. Le gain G peut être défini par une fonction prédéterminée du quotient de la déviation angulaire de la tête α_{T} par la distance angulaire ε. Par exemple, le gain G peut être directement égal au quotient de α_{T} par ε : G = α_{T} / ε. Un porteur qui tourne essentiellement les yeux pour fixer la cible de test («eye-mover») a donc une valeur du gain G proche de zéro, et un porteur qui tourne essentiellement la tête pour fixer la même cible («head-mover») a une valeur de G proche de l'unité.

Ce test de coordination de mouvement "oeil/tête" peut être effectué par le porteur dans la boutique d'un détaillant opticien chez qui il commande sa paire de lunettes équipée du verre conforme à l'invention. D'autres tests de coordination de mouvement "oeil/tête" qui sont équivalents à celui qui vient d'être décrit peuvent être effectués alternativement, sans que la mise en oeuvre de l'invention soit modifiée dans son principe.

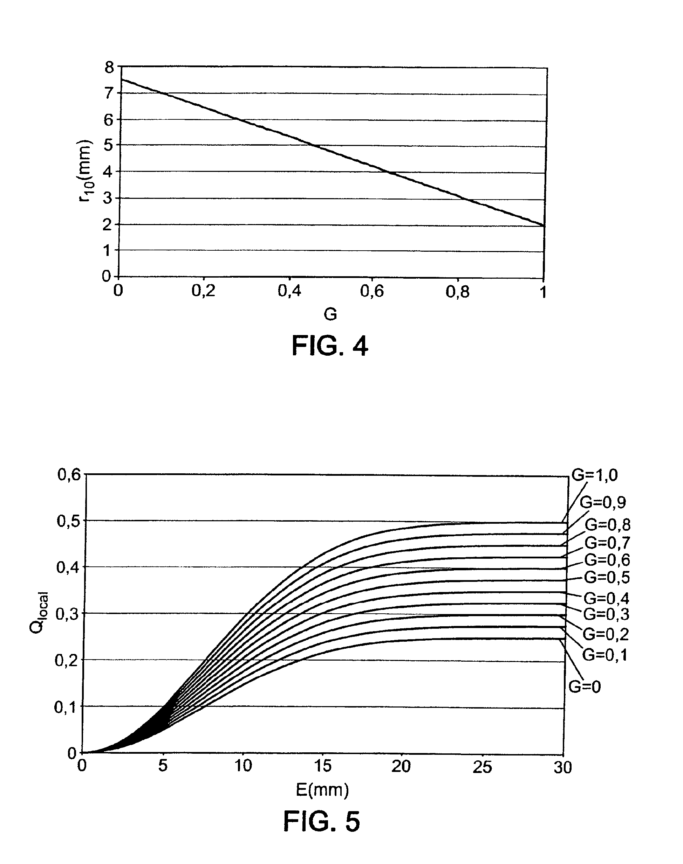

Le diagramme de la figure 4 est un exemple de variation de la taille de la zone de vision principale 10 en fonction du gain G. A titre d'exemple, la zone 10 possède encore une forme de disque. Le rayon de ce disque est noté r₁₀ et est reporté en ordonnée. Les valeurs possibles du gain G sont indiquées en abscisse. La variation du rayon r₁₀ peut être linéaire, entre une valeur minimale de 2 mm qui est attribuée lorsque le gain G est égal à l'unité, et une valeur maximale de 7,5 mm qui est attribuée lorsque le gain G est égal à zéro. Ainsi, une taille peut être attribuée à la zone de vision principale 10, qui est d'autant plus réduite que le porteur bouge plus la tête lorsqu'il regarde successivement dans deux directions différentes.

La proportion des régions 22 dans la zone de vision secondaire 20 peut être une grandeur moyenne ou locale. Lorsqu'il s'agit d'une proportion moyenne, ou proportion globale, elle est notée Q_{moyen} et définie comme le quotient de la somme des surfaces des régions de la série sélectionnée - les régions 22 - par une surface totale de la zone de vision secondaire 20.

Plusieurs méthodes peuvent être utilisées pour réaliser une valeur quelconque de la proportion globale Q_{moyen} des régions 22 dans la zone de vision secondaire 20.

Selon une première méthode, les bandes des régions de la série sélectionnée peuvent avoir des largeurs respectives qui sont fixées initialement dans toute la zone de vision secondaire 20, selon les directions radiales issues du centre O. Dans ce cas, la proportion des régions 22 dans la zone 20 peut être déterminée en sélectionnant une valeur du pas d'alternance s. Autrement dit, les bandes de régions 22 peuvent être plus ou moins écartées ou resserrées à l'intérieur de la zone 20. La valeur du pas s est alors déterminée par les largeurs des bandes de régions qui appartiennent aux séries autres que celle sélectionnée, à savoir les régions 21 dans l'exemple des figures 1a et 1 b. En particulier, les bandes des régions 22 peuvent toutes avoir des largeurs identiques selon les directions radiales.

Selon une seconde méthode, les bandes des régions de la série sélectionnée - les régions 22 - peuvent être réparties avec un pas d'alternance s qui est fixé initialement selon les directions radiales dans la zone de vision secondaire 20. La proportion des régions 22 dans la zone 20 peut alors être déterminée en sélectionnant une valeur du rapport cyclique des bandes des régions 22. En particulier, le pas d'alternance s peut être constant dans la zone de vision secondaire 20. La lentille des figures 1a et 1b d'une part, et la lentille 1' des figures 2a et 2b d'autre part, se distinguent l'une de l'autre par un tel ajustement de la proportion des régions 22 dans la zone de vision secondaire 20.

La proportion des régions 22 à l'intérieur de la zone de vision secondaire 20 peut aussi être ajustée localement et varier entre des points différents de la zone 20. Une telle valeur locale de la proportion est notée Q_{local}. Elle est déterminée à partir d'une portion de la zone 20 qui est réduite autour d'un point considéré, tout en contenant des portions de régions successives qui appartiennent à chaque série. La proportion locale Q_{local} peut être déterminée des mêmes façons que la proportion globale Q_{moyen}, en considérant des valeurs locales pour le pas d'alternance s et pour le rapport cyclique des régions de la série sélectionnée par rapport aux régions de la ou des autre(s) série(s).

Dans ce cas, la proportion locale Q_{local} des régions 22 dans la zone de vision secondaire 20 est de préférence une fonction croissante de l'excentricité E de la direction de regard à travers le verre. Autrement dit, les régions de la série sélectionnée - les régions 22 - occupent une proportion croissante de la zone de vision secondaire 20, pour des distances radiales sur le verre à partir du centre O de la zone 10 qui sont de plus en plus grandes.

Le diagramme de la figure 5 représente de telles variations de la proportion locale Q_{local} des régions 22 dans la zone 20, pour plusieurs valeurs possibles du gain G. Les valeurs de la proportion locale Q_{local} sont repérées en ordonnée, et les valeurs de l'excentricité E du regard à travers le verre sont repérées en abscisse. Pour une valeur fixée de l'excentricité E, la proportion locale Q_{local} est en outre une fonction croissante de la valeur du gain G. D'une façon qui est cohérente avec cette variation de la proportion des régions 22 dans la zone 20, la lentille 1' des figures 2a et 2b correspond alors à une valeur supérieure du gain G, par rapport à la lentille 1 des figures 1 a et 1 b.

D'une façon similaire, la proportion globale Q_{moyen} peut aussi être une fonction croissante de la valeur du gain G.

Un verre fini qui est conforme à l'invention peut être réalisé à partir d'un verre semi-fini dont l'une parmi la face antérieure S1 et la face postérieure S2 détermine la zone de vision principale 10 et la zone de vision secondaire 20, cette dernière étant divisée en au moins deux séries de régions comme il vient d'être décrit. Lorsque l'autre face est usinée selon une forme sphérique ou torique, le verre semi-fini fixe les écarts entre les corrections ophtalmiques qui seront produites par le verre fini respectivement dans la zone de vision principale et chaque série de régions. Dans ce cas, la réalisation du verre peut comprendre les sous-étapes suivantes :
- sélectionner le verre semi-fini, et
- usiner l'autre de la face antérieure S1 et de la face postérieure S2 du verre semi-fini, de sorte que le verre fini produise la première correction ophtalmique dans la zone 10.

Comme indiqué plus haut, le verre semi-fini peut être sélectionné en fonction de la taille de la zone de vision principale 10 ou/et de la proportion des régions 22 dans la zone 20, déterminée(s) pour le porteur. Sa face définitive peut être la face antérieure S1, notamment.

Le tableau 1 ci-dessous regroupe des caractéristiques de quatre verres finis pour presbytes qui sont conformes à l'invention (δ désigne l'unité de dioptrie):

**Tableau 1**

| | Verre 1 | Verre 2 | Verre 3 | Verre 4 |
|---|---|---|---|---|
| Rayon r₁₀ de la zone 10 | 10 mm | 15 mm | 5 mm | 6,5 mm |
| Nombre de séries | 2 | 3 | 2 | 2 |
| Puissance P₁ dans la zone 10 | - 4,00 δ | + 2,00 δ | - 6,00 δ | 0,00 δ |
| Puissance des régions 21 | - 4,00 δ | + 2,00 δ | - 6,00 δ | 0,00 δ |
| Puissance P₂ des régions 22 | - 2,00 δ | 0,00 δ | > - 6,00 δ | + 2,00 δ |
| Puissance des régions 23 | | + 1,00 δ | | |
| Valeur maximale de Q_{local} | 0,50 | 0,25/0,25 | 0,50 | 0,30 |
| Variation de Q_{local} avec E | constante | constantes | constante | croissante |
| Ecart \|P₂-P₁\| | 2,00 δ | 2,00 δ | variable | 2,00 δ |
| Largeur radiale des régions 22 | 50 µm | 25 µm | 50 µm | 25 µm |
| Largeur radiale des régions 23 | | 25 µm | | |

Toute la surface optique du verre 1 produit une correction ophtalmique pour la vision de loin du porteur. Cette correction pour la vision de loin est égale à - 4,00 δ, et l'addition est de + 2,00 δ. La zone de vision principale 10 du verre 1 peut être située approximativement au centre du verre, et la zone de vision secondaire 20 peut être située au moins en partie en dessous de la zone de vision principale 10 par rapport à la position d'usage du verre. La zone de vision secondaire 20 du verre 1 corrige à la fois la vision de loin et la vision de près. Elle permet donc aussi bien au porteur de lire un livre qui est posé sur une table que de voir nettement le sol devant lui.

Toute la surface optique du verre 2 corrige la vision de près du porteur, et la zone de vision secondaire 20 corrige en outre la vision intermédiaire et la vision de loin. La figure 8a montre l'alternance entre les trois séries de régions dans la zone de vision secondaire 20. Celles-ci sont notées respectivement 21, 22 et 23. En outre, le tableau 1 indique les valeurs constantes respectives de la proportion locale des régions 22 et de celle des régions 23 dans la zone 20. Elles sont toutes deux égales à 0,25, et sont obtenues en alternant des bandes de régions 21, 22 et 23 qui ont des largeurs radiales respectives égales à 50 µm, 25 µm et 25 µm. Le verre 2 peut permettre au porteur de voir nettement un escalier devant lui et de lire une page d'écriture qui est accrochée sur un mur à hauteur d'yeux.

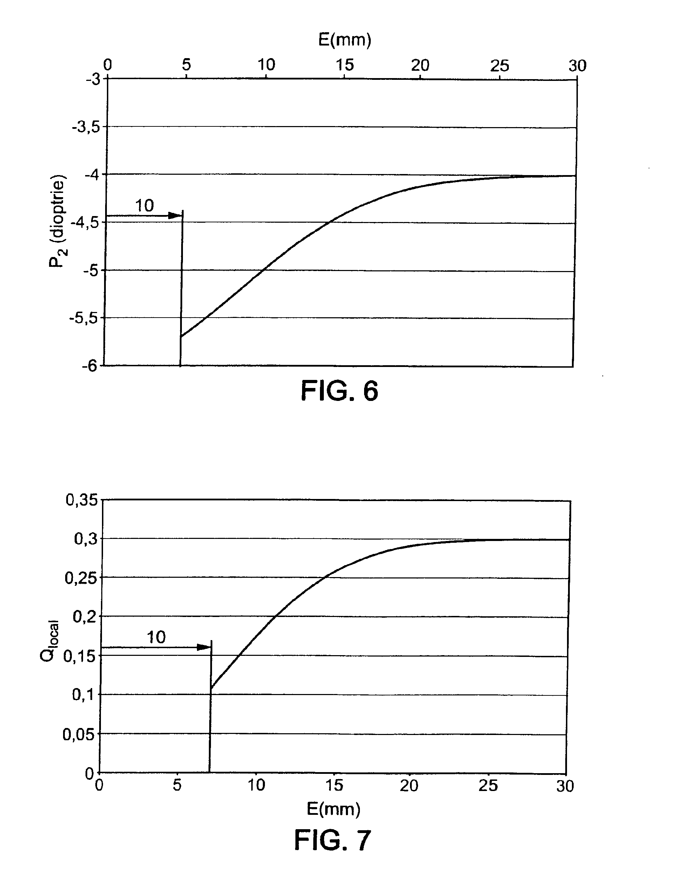

Le verre 3 est similaire au verre 1 en ce qui concerne les zones dans lesquelles les visions de loin et de près du porteur sont corrigées, hormis qu'il correspond à une première puissance optique P₁ qui est différente, et que la seconde puissance optique P₂ qui est produite dans les régions 22 varie. La figure 6 montre ces variations : la puissance optique P₂ croît progressivement en fonction de l'excentricité E, à partir de la valeur - 5,7 δ à la limite de la zone de vision principale 10 jusqu'à la valeur maximale de - 4,00 δ.

Enfin, le verre 4 est aussi similaire au verre 1 en ce qui concerne les zones dans lesquelles les visions de loin et de près du porteur sont corrigées, mais la proportion des régions 22 qui sont dédiées à la correction de la vision de près à l'intérieur de la zone 20 augmente avec l'excentricité E. La figure 7 reproduit ces variations : Q_{local} croît progressivement à partir de la valeur 0,11 à la limite de la zone de vision principale 10, jusqu'à la valeur maximale 0,30.

Les deux diagrammes des figures 6 et 7 font apparaître la zone de vision principale 10 mais, à cause des petites dimensions radiales des régions 22, celles-ci n'apparaissent pas dans les parties de ces courbes qui correspondent à la zone de vision secondaire 20.

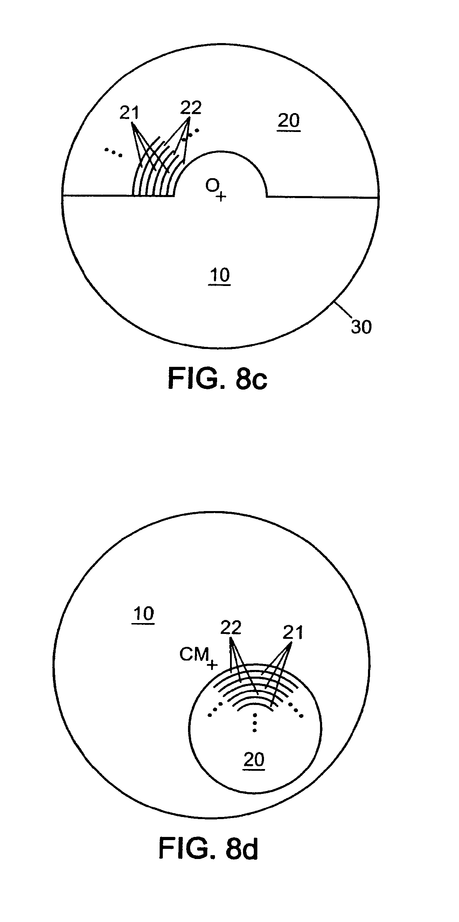

Les figures 8b et 8c sont des vues respectives en plan de deux lentilles selon l'invention, qui montrent des configurations possibles pour la zone de vision principale 10 et la zone de vision secondaire 20. Dans les deux cas, la zone de vision principale 10 comprend un disque qui est globalement centré par rapport au bord périphérique 30, et un secteur angulaire de pi radians autour de ce disque, s'étendant radialement à partir de celui-ci jusqu'au bord 30. La zone de vision secondaire 20 occupe le secteur angulaire complémentaire.

Dans la configuration de la figure 8b, le secteur angulaire de la zone 10 est situé dans le haut de la lentille, par rapport à la position usuelle d'utilisation de celle-ci. La zone de vision secondaire 20 est alors située dans le bas de la lentille. Dans ce cas, la zone 10 peut être dédiée à la correction de la vision de loin, et la zone 20 peut contenir deux séries de régions qui peuvent être dédiées respectivement à la correction de la vision de loin et à celle de la vision de près. Les verres 1, 3 et 4 du tableau 1 peuvent avoir une telle configuration.

La configuration de la figure 8c est déduite de celle de la figure 8b en échangeant les positions respectives des secteurs angulaires qui sont occupés par les zones 10 et 20. La zone de vision principale 10 occupe maintenant le disque central et le secteur angulaire inférieur, et la zone de vision secondaire 20 occupe le secteur angulaire supérieur. La zone 10 peut être dédiée à la correction de la vision de près, et les visions de loin et de près peuvent être corrigées simultanément dans la zone 20.

Pour les deux configurations des figures 8b et 8c, les régions de chaque série à l'intérieur de la zone de vision secondaire 20 peuvent être des bandes hémicirculaires qui sont alternées à partir du disque appartenant à la région 10.

Enfin, la figure 8d illustre encore une autre configuration de lentille selon l'invention, selon laquelle la zone de vision secondaire 20 est un disque qui est décalé par rapport à la croix de montage CM de la lentille. La zone de vision principale 10 occupe alors le reste de la surface de la lentille. Les lentilles 1, 3 et 4 du tableau 1 peuvent aussi avoir cette configuration.

Il est entendu que l'invention peut être mise en oeuvre en modifiant les valeurs numériques qui ont été données dans la description détaillée ci-dessus, ainsi que les variations qui sont représentées par les diagrammes des figures annexées. De même, la zone de vision principale, la zone de vision secondaire, et les régions de chaque série peuvent avoir des formes différentes de celles qui ont été décrites.

En outre, il est entendu que la zone de vision principale, la zone de vision secondaire, et les séries de régions peuvent être définies par une surface intermédiaire de la lentille. Pour cela, la lentille peut être constituée de deux éléments transparents qui sont constitués de matériaux respectifs ayant des valeurs différentes d'un indice de réfraction lumineuse. Ces deux éléments de lentille sont accolés selon la surface intermédiaire, avec des formes complémentaires.

## Revendications

1. Procédé de réalisation d'un verre multifocal (1) de lunettes ophtalmiques destiné à un porteur presbyte, comprenant les étapes suivantes :
/1/ obtenir une première correction ophtalmique du porteur pour une première distance de vision, et au moins deux secondes corrections ophtalmiques dudit porteur respectivement pour au moins deux secondes distances de vision, lesdites deux secondes corrections étant différentes entre elles ;
/2/ déterminer une zone de vision principale (10) et une zone de vision secondaire (20) du verre ;
/3/ diviser la zone de vision secondaire (20) en au moins deux séries de régions (21, 22), les dites régions étant contiguës et alternées par rapport aux dites séries avec un pas inférieur ou égal à 1 mm ;
/4/ déterminer des premiers paramètres du verre dans la zone de vision principale (10), correspondant à la première correction ophtalmique, et, pour chaque série de régions (21, 22), déterminer des seconds paramètres dudit verre dans les régions de ladite série en fonction d'une des secondes corrections ophtalmiques obtenue à l'étape /1/ et affectée à ladite série de régions ; et
/5/ réaliser le verre conformément aux dits premiers et seconds paramètres,
le procédé étant **caractérisé en ce qu'**une proportion, dans la zone de vision secondaire (20) du verre, des régions d'au moins une série (22) sélectionnée parmi les séries de régions utilisées à l'étape /3/, est déterminée en fonction d'une amplitude d'un mouvement de tête effectué par le porteur (100) lorsque ledit porteur regarde successivement des objets situés dans des directions différentes, de sorte qu'un quotient d'une somme de surfaces de régions de la série sélectionnée par une surface d'une partie correspondante de la zone de vision secondaire (20) croisse en fonction de l'amplitude du mouvement de tête effectué par le porteur.

2. Procédé selon la revendication 1, suivant lequel la zone de vision principale (10) et les régions de chaque série (21, 22) sont déterminées par des variations d'au moins un paramètre d'une même surface (S1, S2) du verre.

3. Procédé selon la revendication 1 ou 2, suivant lequel une taille et/ou une position de la zone de vision principale (10) dans le verre est déterminée à l'étape /2/ en fonction d'une activité du porteur mettant en oeuvre la première distance de vision.

4. Procédé selon la revendication 1 ou 2, suivant lequel l'étape /2/ comprend les sous-étapes suivantes :
/2-1/ caractériser une amplitude d'un mouvement de tête du porteur (100), effectué lorsque ledit porteur regarde successivement des objets situés dans des directions différentes ; et
/2-2/ déterminer une taille de la zone de vision principale (10) du verre de sorte que ladite taille de la zone de vision principale décroisse en fonction de l'amplitude du mouvement de tête **caractérisée** pour le porteur.

5. Procédé selon l'une quelconque des revendications précédentes, suivant lequel la zone de vision principale (10) du verre, dans laquelle les paramètres dudit verre correspondent à la première correction ophtalmique, contient un disque de rayon 1 mm.

6. Procédé selon l'une quelconque des revendications précédentes, suivant lequel les régions de chaque série (21, 22) sont des bandes disposées dans un secteur angulaire autour d'une partie au moins de la zone de vision principale (10) du verre, et alternées le long de directions radiales partant de ladite partie de zone de vision principale vers un bord périphérique (30, 31) du verre.

7. Procédé selon la revendication 6, suivant lequel les bandes des régions de chaque série sélectionnée (22) ont des largeurs respectives fixées selon les directions radiales dans la zone de vision secondaire (20) du verre, et suivant lequel la proportion des régions de ladite série sélectionnée dans ladite zone de vision secondaire est déterminée en sélectionnant au moins une valeur du pas d'alternance des bandes de régions par rapport aux séries.

8. Procédé selon la revendication 6, suivant lequel les bandes des régions (21, 22) sont alternées par rapport aux séries avec une valeur fixée du pas selon les directions radiales dans la zone de vision secondaire (20) du verre, et suivant lequel la proportion des régions de ladite série sélectionnée (22) dans ladite zone de vision secondaire est déterminée en sélectionnant au moins une valeur d'un rapport cyclique des bandes de régions de la série sélectionnée.

9. Procédé selon l'une quelconque des revendications précédentes, suivant lequel les régions de l'une des séries (21, 22) ont chacune au moins une dimension comprise entre 15 µm et 1000 µm, de préférence entre 25 µm et 50 µm.

10. Procédé selon l'une quelconque des revendications 1 à 9, suivant lequel la zone de vision secondaire (20) est divisée en deux séries de régions (21, 22), et suivant lequel la première distance de vision et une quelconque des secondes distances de vision sont égales, avec l'une des secondes distances de vision supérieure à 2 m, et l'autre seconde distance de vision comprise entre 0,3 m et 0,5 m, ou entre 0,5 m et 2 m.

11. Procédé selon l'une quelconque des revendications 1 à 9, suivant lequel la zone de vision secondaire (20) est divisée en trois séries de régions (21, 22, 23), et suivant lequel la première distance de vision et une quelconque des secondes distances de vision sont égales, avec l'une des secondes distances de vision comprise entre 0,3 m et 0,5 m, une autre des secondes distances de vision comprise entre 0,5 m et 2 m, et une dernière des secondes distances de vision supérieure à 2 m.

12. Procédé selon l'une quelconque des revendications précédentes, suivant lequel l'amplitude du mouvement de tête effectué par le porteur (100) est **caractérisée en** exécutant les étapes suivantes :
- mesurer un angle d'une rotation de la tête du porteur, lorsque ledit porteur regarde successivement deux objets situés dans des directions séparées angulairement ; et
- déterminer une valeur d'un gain à partir d'un quotient entre l'angle mesuré pour la rotation de la tête du porteur d'une part, et une distance angulaire entre les deux directions de regard d'autre part, ledit gain variant comme une fonction croissante ou comme une fonction décroissante dudit quotient.

13. Procédé selon l'une quelconque des revendications précédentes, suivant lequel l'étape /5/ comprend les sous-étapes suivantes :
/5-1/ sélectionner un verre semi-fini (1), dont l'une parmi une face antérieure (S1) et une face postérieure (S2) dudit verre semi-fini détermine une zone de vision principale (10) et une zone de vision secondaire (20), ladite zone de vision secondaire étant divisée en au moins deux séries de régions (21, 22) contiguës et alternées par rapport aux dites séries avec un pas inférieur ou égal à 1 mm, ledit verre semi-fini fixant des écarts entre des corrections ophtalmiques produites respectivement dans la zone de vision principale (10) et dans chaque série de régions (21, 22) pour un verre fini réalisé à partir dudit verre semi-fini ; et
/5-2/ usiner l'autre de la face antérieure (S1) et de la face postérieure (S2) du verre semi-fini, de sorte que le verre produise la première correction ophtalmique dans la zone de vision principale (10).

14. Procédé selon la revendication 13, suivant lequel le verre semi-fini (1) est sélectionné à la sous-étape /5-1/ en fonction de la taille de la zone de vision principale (10) déterminée pour le porteur (100), ou/et de la proportion déterminée pour ledit porteur (100), des régions de la série sélectionnée (22) dans la zone de vision secondaire (20).

## Claims

1. Method for producing a multifocal ophthalmic eyeglass (1) intended for a presbyopic wearer, comprising the following steps:
/1/ obtaining a first ophthalmic correction of the wearer for a first vision distance, and at least two second ophthalmic corrections of said wearer respectively for at least two second vision distances, said two second corrections being different from each other;
/2/ determining a principal vision zone (10) and a secondary vision zone (20) of the eyeglass;
/3/ dividing the secondary vision zone (20) into at least two series of regions (21, 22), said regions being contiguous and alternating with respect to said series with a pitch of less than or equal to 1 mm;
/4/ determining the first parameters of the eyeglass in the principal vision zone (10), corresponding to the first ophthalmic correction, and, for each series of regions (21, 22), determining second parameters of said eyeglass in the regions of said series as a function of one of the second ophthalmic corrections obtained in step /1/ and assigned to said series of regions; and
/5/ producing the eyeglass according to said first and second parameters,
the method being **characterized in that** a proportion, in the secondary vision zone (20) of the eyeglass, of the regions of at least one series (22) selected from the series of regions used in step /3/, is determined as a function of an amplitude of a head movement performed by the wearer (100) when said wearer successively views objects located in different directions, so that a quotient of a sum of surfaces of regions of the selected series divided by a surface of a corresponding part of the secondary vision zone (20) increases as a function of the amplitude of the head movement performed by the wearer.

2. Method according to claim 1, wherein the principal vision zone (10) and the regions of each series (21, 22) are determined by variations of at least one parameter of one and same surface (S1, S2) of the eyeglass.

3. Method according to claim 1 or 2, wherein a size and/or a position of the principal vision zone (10) in the eyeglass is determined in step /2/ as a function of an activity of the wearer using the first vision distance.

4. Method according to claim 1 or 2, wherein step /2/ comprises the following sub-steps:
/2-1/ characterizing an amplitude of a head movement of the wearer (100), performed when said wearer successively views objects located in different directions; and
/2-2/ determining a size of the principal vision zone (10) of the eyeglass such that said size of the principal vision zone decreases as a function of the amplitude of the head movement **characterized** for the wearer.

5. Method according to any one of the preceding claims, wherein the principal vision zone (10) of the eyeglass, in which the parameters of said eyeglass correspond to the first ophthalmic correction, contains a disk with a radius of 1 mm.

6. Method according to any one of the preceding claims, wherein the regions of each series (21, 22) are strips arranged in an angular sector around at least a part of the principal vision zone (10) of the eyeglass, and alternating along radial directions from said part of the principal vision zone towards a peripheral edge (30, 31) of the eyeglass.

7. Method according to claim 6, wherein the strips of the regions of each selected series (22) have respective fixed widths along radial directions in the secondary vision zone (20) of the eyeglass, and wherein the proportion of the regions of said selected series in said secondary vision zone is determined by selecting at least one value for the alternating pitch of the strips of regions with respect to the series.

8. Method according to claim 6, wherein the strips of the regions (21, 22) are alternating with respect to the series with a fixed pitch value along the radial directions in the secondary vision zone (20) of the eyeglass, and wherein the proportion of the regions of said selected series (22) in said secondary vision zone is determined by selecting at least one value for a period ratio of the strips of regions of the selected series.

9. Method according to any one of the preceding claims, wherein the regions of one of the series (21, 22) each have at least one dimension comprised between 15 µm and 1000 µm, preferably between 25 µm and 50 µm.

10. Method according to any one of claims 1 to 9, wherein the secondary vision zone (20) is divided into two series of regions (21, 22), and wherein the first vision distance and one of the second vision distances are equal, with one of the second vision distances greater than 2 m, and the other second vision distance comprised between 0.3 m and 0.5 m, or between 0.5 m and 2 m.

11. Method according to any one of claims 1 to 9, wherein the secondary vision zone (20) is divided into three series of regions (21, 22, 23), and wherein the first vision distance and one of the second vision distances are equal, with one of the second vision distances comprised between 0.3 m and 0.5 m, another one of the second vision distances comprised between 0.5 m and 2 m, and a last one of the second vision distances greater than 2 m.

12. Method according to any one of the preceding claims, wherein the amplitude of the head movement performed by the wearer (100) is **characterized by** performing the following steps:
- measuring an angle of a rotation of the head of the wearer, when said wearer successively views two objects located in angularly separated directions; and
- determining a value of a gain from a quotient between the angle measured for the rotation of the head of the wearer on the one hand, and an angular distance between the two directions of view on the other hand, said gain varying as an increasing function or as a decreasing function of said quotient.

13. Method according to any one of the preceding claims, wherein step /5/ comprises the following sub-steps:
/5-1/ selecting a semi-finished eyeglass (1), of which one of a front face (S1) and a rear face (S2) of said semi-finished eyeglass determines a principal vision zone (10) and a secondary vision zone (20), said secondary vision zone being divided into at least two series of regions (21, 22) contiguous and alternating with respect to said series with a pitch of less than or equal to 1 mm, said semi-finished eyeglass setting differences between ophthalmic corrections produced respectively in the principal vision zone (10) and in each series of regions (21, 22) for a finished eyeglass produced from said semi-finished eyeglass; and
/5-2/ machining the other one of the front face (S1) and the rear face (S2) of the semi-finished lens, so that the eyeglass produces the first ophthalmic correction in the principal vision zone (10).

14. Method according to claim 13, wherein the semi-finished eyeglass (1) is selected at sub-step /5-1/ according to the size of the principal vision zone (10) determined for the wearer (100), and/or the proportion determined for said wearer (100), of the regions of the selected series (22) in the secondary vision zone (20).

## Patentansprüche

1. Herstellungsverfahren für ein multifokales Glas (1) einer Brille für einen kurzsichtigen Träger, umfassend die folgenden Schritte:
/1/ Erhalten einer ersten Sehkorrektur des Trägers für einen ersten Sehabstand und wenigstens zwei zweite Sehkorrekturen des Trägers für wenigstens zwei entsprechende zweite Sehabstände, wobei sich die zwei zweiten Korrekturen voneinander unterscheiden;
/2/ Bestimmen eines Hauptsehbereichs (10) und eines Nebensehbereichs (20) des Glases;
/3/ Aufteilen des Nebensehbereichs (20) in wenigstens zwei Bereichsserien (21, 22), wobei die Bereiche bezüglich der Serien mit einer Schrittgröße kleiner oder gleich 1 mm aneinandergrenzend und alterniert sind;
/4/ Bestimmen der ersten Parameter des Glases im Hauptsehbereich (10) entsprechend der ersten Sehkorrektur, und für jede Bereichsserie (21, 22) Bestimmen der zweiten Parameter des Glases in den Bereichen der Serie abhängig von einer der zweiten, in Schritt /1/ erhaltenen und der jeweiligen Bereichsserie zugeordneten Sehkorrekturen; und
/5/ Herstellen des Glases gemäß den ersten und zweiten Parametern, wobei das Verfahren **dadurch gekennzeichnet ist, dass** im Nebensehbereich (20) des Glases ein Verhältnis der Bereiche wenigstens einer aus den in Schritt /3/ verwendeten Bereichsserien ausgewählten Serie (22) gemäß einer Amplitude einer Kopfbewegung bestimmt wird, die der Träger (100) durchführt, wenn der Träger nacheinander in unterschiedlichen Richtungen angeordnete Gegenstände anschaut, sodass ein Quotient aus einer Summe der Flächen der Bereiche der gewählten Serie und einer Fläche eines entsprechenden Teils des Nebensehbereichs (20) in Abhängigkeit von der Amplitude der vom Träger durchgeführten Kopfbewegung zunimmt.

2. Verfahren nach Anspruch 1, wobei der Hauptsehbereich (10) und die Bereiche jeder Serie (21, 22) durch Variationen wenigstens eines Parameters einer gleichen Fläche (S1, S2) des Glases bestimmt werden.

3. Verfahren nach Anspruch 1 oder 2, wobei eine Größe und/oder eine Position des Hauptsehbereichs (10) in dem Glas in Schritt /2/ in Abhängigkeit von einer Aktivität des Trägers bestimmt werden, die den ersten Sehabstand betrifft.

4. Verfahren nach Anspruch 1 oder 2, wobei der Schritt /2/ die folgenden Unterschritte umfasst:
/2-1/ Beschreiben einer Amplitude einer Kopfbewegung des Trägers (100), die durchgeführt wird, wenn der Träger nacheinander in unterschiedlichen Richtungen angeordnete Gegenstände anschaut; und
/2-2/ Bestimmen einer Größe des Hauptsehbereichs (10) des Glases, sodass die Größe des Hauptsehbereichs in Abhängigkeit von der für den Träger beschriebenen Amplitude der Kopfbewegung abnimmt.

5. Verfahren nach einem der vorangehenden Ansprüche, wobei der Hauptsehbereich (10) des Glases, bei welchem die Parameter des Glases der ersten Sehkorrektur entsprechen, eine Scheibe mit einem Radius von 1 mm umfasst.

6. Verfahren nach einem der vorangehenden Ansprüche, wobei die Bereiche jeder Serie (21, 22) Streifen sind, die in einem Winkelabschnitt rund um wenigstens einen Teil des Hauptsehbereichs (10) des Glases angeordnet werden und entlang radialer Richtungen von dem Teil des Hauptsehbereichs ausgehend zu einem Außenrand (30, 31) des Glases alterniert werden.

7. Verfahren nach Anspruch 6, wobei die Streifen der Bereiche jeder gewählten Serie (22) jeweilige Größen aufweisen, die entsprechend den radialen Richtungen im Nebensehbereich (20) des Glases gewählt werden und wobei das Verhältnis der Bereiche der gewählten Serie in dem Nebensehbereich durch Auswählen wenigstens eines Wertes des Alternanzschrittes der Bereichsstreifen bezüglich der Serien bestimmt wird.

8. Verfahren nach Anspruch 6, wobei die Bereichsstreifen (21, 22) bezüglich der Serien mit einem festgelegten Schrittwert entsprechend den Radialrichtungen im Nebensehbereich (20) des Glases alterniert werden und wobei das Verhältnis der Bereiche der gewählten Serie (22) im Nebensehbereich durch Auswählen wenigstens eines Wertes eines zyklischen Verhältnisses der Bereichsstreifen der gewählten Serie bestimmt wird.

9. Verfahren nach einem der vorangehenden Ansprüche, wobei die Bereiche einer der Serien (21, 22) jeweils wenigstens eine Abmessung zwischen 15 µm und 1000 µm, vorzugsweise zwischen 25 µm und 50 µm aufweisen.

10. Verfahren nach einem der Ansprüche 1 bis 9, wobei der Nebensehbereich (20) in zwei Bereichsserien (21, 22) aufgeteilt wird, und wobei der erste Sehabstand und ein beliebiger der zweiten Sehabstände gleich sind, wobei einer der zweiten Sehabstände größer als 2 m ist und der andere zweite Sehabstand zwischen 0,3 m und 0,5 m oder zwischen 0,5 m und 2 m liegt.

11. Verfahren nach einem der Ansprüche 1 bis 9, wobei der Nebensehbereich (20) in drei Bereichsreihen (21, 22, 23) aufgeteilt wird und wobei der erste Sehabstand und ein beliebiger der zweiten Sehabstände gleich sind, wobei einer der zweiten Sehabstände zwischen 0,3 m und 0,5 m, ein anderer der zweiten Sehabstände zwischen 0,5 m und 2 m liegt und ein letzter der zweiten Sehabstände größer als 2 m ist.

12. Verfahren nach einem der vorangehenden Ansprüche, wobei die Amplitude der von dem Träger (100) durchgeführten Kopfbewegung durch Ausführen der folgenden Schritte **gekennzeichnet** ist:
- Messen eines Winkels einer Drehung des Kopfes des Trägers, wenn der Träger nacheinander zwei Objekte anschaut, die in winklig getrennten Richtungen angeordnet sind; und
- Bestimmen eines Wertes eines Zuwachses, ausgehend von einem Quotienten aus einerseits dem für die Drehung des Kopfes gemessenen Winkel und andererseits einer Winkelentfernung zwischen den zwei Blickrichtungen, wobei der Zuwachs wie eine zunehmende Funktion oder eine abnehmende Funktion des Quotienten variiert.

13. Verfahren nach einem der vorangehenden Ansprüche, wobei der Schritt /5/ die folgenden Unterschritte umfasst:
/5-1/ Auswählen eines halbfertigen Glases (1), wobei von einer Vorderseite (S1) und einer Rückseite (S2) des Glases eine Seite einen Hauptsehbereich (10) und einen Nebensehbereich (20) definiert, wobei der Nebensehbereich in wenigstens zwei Bereichsserien (21, 22) aufgeteilt wird, welche bezüglich der Serien mit einer Schrittgröße kleiner oder gleich 1 mm aneinandergrenzend und alterniert sind, wobei das halbfertige Glas Abstände zwischen Sehkorrekturen festlegt, die jeweils für ein auf der Grundlage des halbfertigen Glases hergestelltes Fertigglas in dem Hauptsehbereich (10) und in jeder Bereichsserie (21, 22) erzeugt werden; und
/5-2/ Fertigen der anderen Seite von Vorderseite (S1) und Rückseite (S2) des halbfertigen Glases, sodass das Glas die erste Sehkorrektur in dem Hauptsehbereich (10) erzeugt.

14. Verfahren nach Anspruch 13, wobei das halbfertige Glas (1) im Unterschritt /5-1/ abhängig von der Größe des für den Träger (100) bestimmten Hauptsehbereichs (10) und/oder abhängig von dem für den Träger (100) bestimmten Verhältnis der Bereiche der gewählten Serie (22) im Nebensehbereich (20) gewählt wird.
